# EUROPEAN PATENT SPECIFICATION

(11) **EP 1 094 232 B1**
(45) Date of publication and mention of the grant of the patent: **14.05.2003**
(21) Application number: 00309188.1
(22) Date of filing: 18.10.2000
(51) Int. Cl.: F16B 31/04

(54) **Bolt and fastening arrangement**
Bolzen und Befestigungsanordnung
Boulon et système de fixation

(30) Priority: 22.10.1999 US 425331
(43) Date of publication of application: 25.04.2001
(73) Proprietor: Junkers, John K., Saddle River, New Jersey 07458 (US)
(72) Inventor: Junkers, John K., Saddle River, New Jersey 07458 (US)
(74) Representative: Newby, Martin John

(56) References cited:
- EP-A- 0 940 590
- DE-C- 4 405 974
- US-A- 5 539 970
- US-A- 5 640 749

## Description

This invention relates generally to a bolt or threaded connector for connecting two parts together. The invention also relates to a fastening arrangement provided with such a bolt.

Threaded connectors or bolts for connecting two parts together are known in the art. Some known threaded connectors are formed as threaded bolts with or without a head, and with or without a nut. An example of one such threaded connector is disclosed in US-A-5,318,397 although this known threaded connector can be further improved.

Another known bolt is disclosed in EP-A-094-0590 in which a bolt member has a screw-threaded first portion in screw-threaded connection with a sleeve. Although the bolt member is provided with tool-engaging means for applying a given force thereto in one direction, tool-engaging means are not povided on the sleeve.

Accordingly it is an aim of the present invention to provide an improved bolt as well as a fastening arrangement provided with such a bolt.

According to one aspect of the present invention there is provided a bolt as claimed in the ensuing claim 1.

When the bolt is designed in accordance with the present invention, it has a simple construction and can be elongated and relaxed when needed.

According to another aspect of the present invention there is provided a fastening arrangement as claimed in the ensuing claim 5.

Embodiments of the invention will now be described, by way of example only, with particular reference to the accompanying drawings, in which:
Figure 1 is a view partly in cross-section showing one embodiment of a bolt according to the present invention for connecting two parts together;
Figure 2 is a view partly in cross-section showing another embodiment of a bolt according to the present invention for connecting two parts together;
Figure 3 is a view partly in cross-section showing a further embodiment of a bolt according to the present invention for connecting two parts together; and
Figure 4 is a view showing a fastening device provided with a bolt in accordance with the present invention.

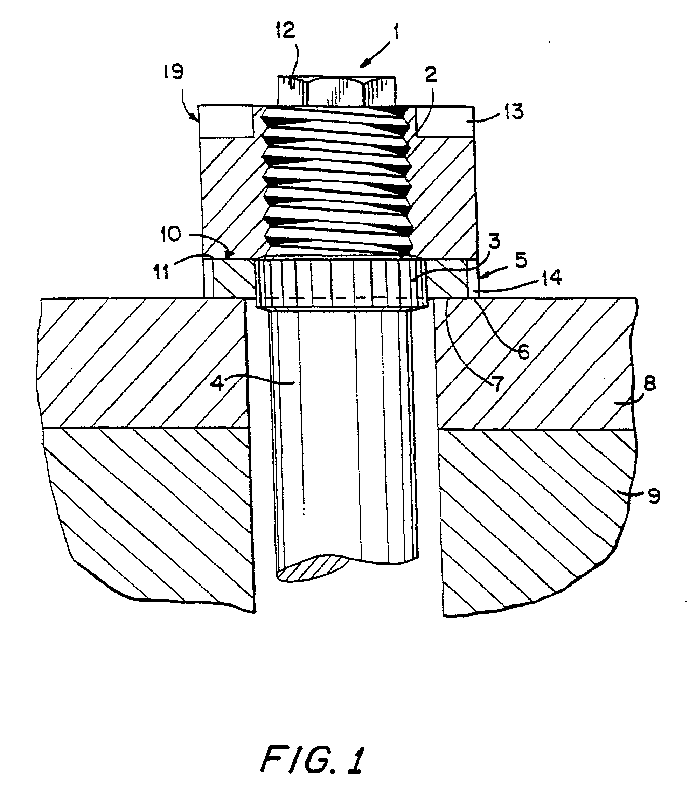

Figure 1 shows a bolt in accordance with the present invention having a bolt member which is generally designated by the reference numeral 1 and which has a longitudinal axis. The bolt member 1 has a polygonal head 12 at one end and a screw-threaded portion 2 extending from the one end of the bolt member. The bolt member 1 further has another portion, generally designated by the reference numeral 3, which has a polygonal circumference or cross-section which is axially spaced from the screw-threaded bolt portion 2. Finally, the bolt member 1 has a shaft portion 4 which can be provided with a head (not shown) at its opposite end. The polygonal circumference of the bolt portion 4 can be formed by a plurality of splines which extend in the axial direction of the bolt member and are circumferentially spaced from one another in a peripheral direction of the bolt member 1.

The bolt member 1 is provided with a friction washer generally designated by the reference numeral 5. The friction washer has a first surface area 6 which abuts against a surface area 7 of one part 8 which is to be connected to another part 9. The friction washer 5 is connectable with the polygonal circumference of the bolt portion 3. In particular, the friction washer 5 has an inner surface having a shape corresponding to the shape of the outer surface of the bolt portion 3. In the embodiment shown, the inner surface of the friction washer 5 is provided with a plurality of formations which are circumferentially distributed and formed as splines which correspond to the splines of the bolt portion 3 and engage with these splines. With the splines interengaged in this manner, the bolt member 1 is unable to rotate relative to the friction washer 5, but can be displaced in an axial direction relative to the friction washer 5. The friction washer 5 also has an outer surface provided with engaging means formed for example by a plurality of circumferentially distributed formations 14 such as splines or the like.

The bolt further has a sleeve generally designated by the reference numeral 19. The sleeve 19 has a surface area 10 which abuts against an opposite surface area 11 of the friction washer 5. The sleeve 19 is connected with the screw thread of the screw-threaded portion 2 of the bolt member 1. In particular, the sleeve 19 is provided with an inner screw thread which screw-threadedly engages the outer screw thread of the threaded portion 2 of the bolt member 1. The sleeve 19 is also provided with engaging means formed for example by a plurality of castellations 13.

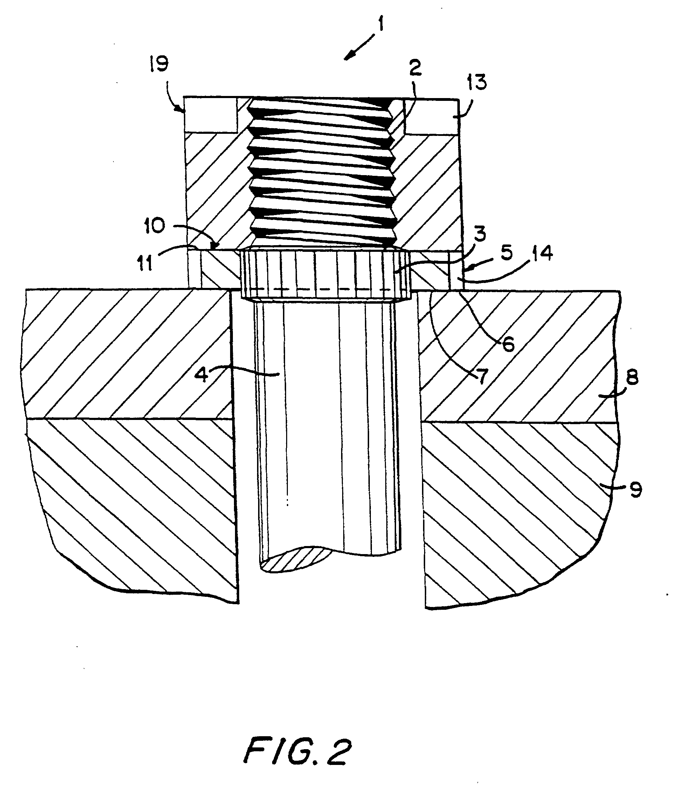

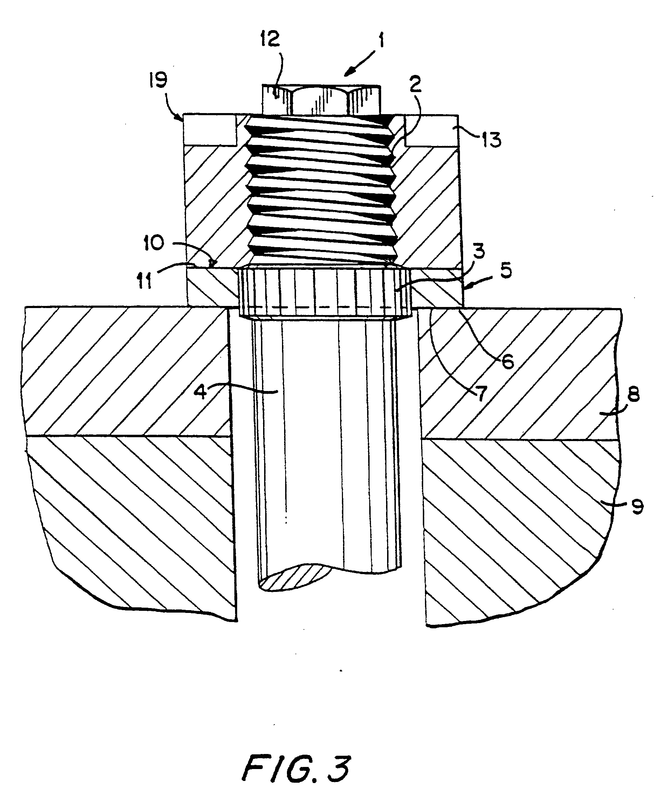

Figures 2 and 3 show two further embodiments of a bolt in accordance with the present invention. Where possible the same reference numerals have been used in the different figures to identify the same or similar parts.

In the bolt shown in Figure 2, the bolt member 1 is not provided with engaging means - in other words the bolt member has no bolt head 12. Instead engaging means are provided on the sleeve 19 and the washer 5. The engaging means of the sleeve 19 are formed by a plurality of castellations 13 on its upper end whereas the engaging means of the washer 5 are formed by a plurality of splines 14.

In the embodiment shown in Figure 3 the washer 5 does not have engaging means. Instead the engaging means are provided on the bolt member 1 and the sleeve 19. The engaging means of the bolt member 1 are formed by the polygonally shaped head 12, and the engaging means of the sleeve 19 are formed by a plurality of castellations 13 on its upper end.

In use of the bolt shown in Figure 2, when given equal turning forces are applied in one direction to the bolt member 1 by engaging the washer 5 through the splines 14 with a tool and in the opposite direction to the sleeve 19 through the castellations 13 by the tool, only the sleeve 19 turns while the bolt member 1 is elongated or relaxed depending on the direction that the sleeve is turned. The reason is that the sleeve 19 is subjected only to the friction in the screw thread and on its surface area 10. The bolt member 1 on the other hand is subjected to the frictions in the screw thread, on the surface area 11 of the washer 5 which is non rotatably connected with the bolt member 1, on the surface area 7 of the washer 5, and on the other end of the bolt member 1 on which a bolt head can be provided or which can be fixed in the part 9. Since the bolt member 1 is subjected to substantially higher frictional forces than the sleeve 19, only the sleeve 19 and not the bolt member 1 is turned, the bolt member 1 being only elongated or relaxed.

In the embodiment of Figure 3 when the given force is applied in one direction to the bolt member 1 through the bolt head 12 and a given force is applied in the opposite direction to the sleeve 19 through the castellations 13, only the sleeve 19 turns while the bolt member does not turn and is only elongated or relaxed. The reasons are the same as explained with respect to the embodiment of Figure 2, in particular since the friction applied to the bolt member 1 is substantially higher than the friction applied to the sleeve 9.

In the embodiment of Figure 1, the bolt member 1 has engaging means in the form of the polygonally shaped head 12, the sleeve 19 has engaging means in the form of castellations 13, and the washer 5 has further engaging means in the form of the splines 14. The bolt shown in Figure 1 can operate alternatingly either by application of the forces to the sleeve 19 through the castellations 13 and to the bolt member 1 through the head 12, or by application of the forces to the sleeve 19 through the castellations 13 and to the washer 5 through the splines 14.

The forces which are applied to the bolt in accordance with the present invention can be an active force applied to the sleeve 19 and intended to turn the sleeve 19 in a circumferential direction and an opposite holding force applied in an opposite direction to the bolt member 1 or to the washer 5. On the other hand, the active force can be applied to the bolt member 1 or to the washer 5, while the holding force can be applied to the sleeve 19.

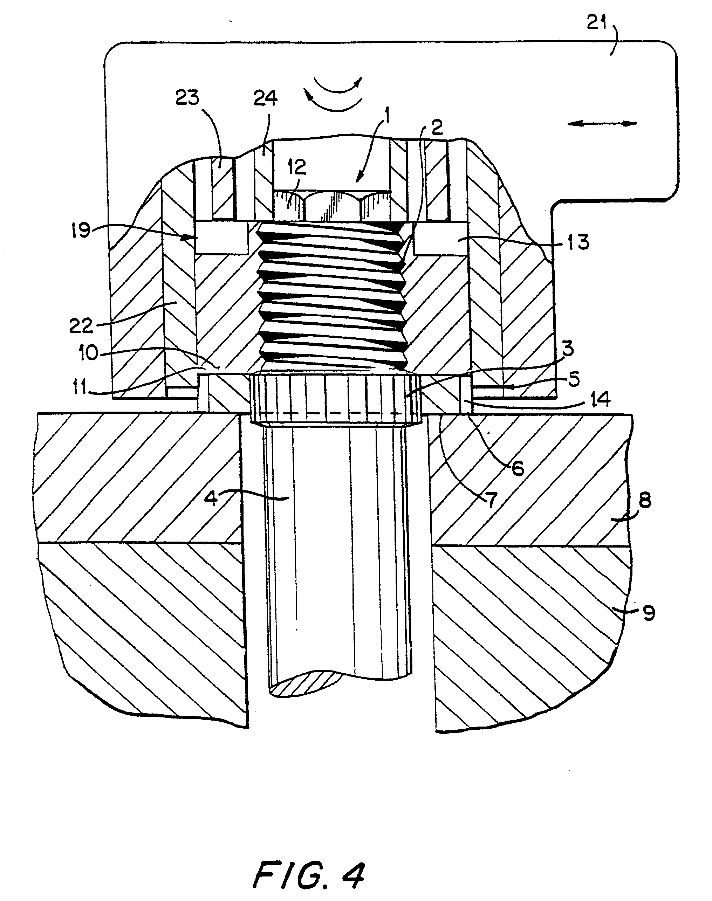

Figure 4 shows a complete fastening arrangement in accordance with the present invention which includes a bolt, as described herein above, and a torque tool generally designated by the reference numeral 21. The torque tool 21 has a drive (not shown) formed, for example, as a fluid operated drive with a reciprocating piston having a piston rod, and a driven part which includes for example a ratchet mechanism connected with the reciprocating rod of the drive. The tool 21 is further provided with a plurality of driving tool elements designated by the reference numerals 22, 23, and 24. The driving tool element 22 is formed for example as a socket for engaging the splines 14 of the washer 5 and, for this purpose, can be provided with corresponding counter splines. The driving tool element 23 is intended to engage with the castellations 13 of the sleeve 19 and for this purpose can be formed as a ring provided with lower projections engaging in the gaps between the castellations. Finally, the driving tool element 24 is intended to engage with the bolt head 12 of the bolt member and can be formed as a socket having an inner polygonal, e.g. hexagonal, opening corresponding to the polygonal, e.g. hexagonal, shape of the bolt head 12.

The corresponding driving element 22, 23, 24 can be activated alternatingly and selectively by a user. For example, for the bolt shown in Figure 2, the driving elements 22 and 23 can engage the washer 5 and the sleeve 19, respectively, for applying corresponding forces to them. In the embodiment of Figure 3 the driving elements 23 and 24 can apply corresponding forces to the sleeve 19 and to the bolt member 1, respectively. In the embodiment of Figure 1, as mentioned hereinabove, selectively either the washer 5 and the sleeve 19 can be engaged by the driving elements 22 and 23, respectively, or the sleeve 19 and the bolt member 1 can be engaged by the driving elements 23 and 24, respectively, and thereby corresponding forces are applied.

The torque tool 21 is a single tool which on the one hand provides the active force and on the other hand provides the opposite holding force, or provides two opposite active forces.

While the invention has been illustrated and described as embodied in a bolt and a fastening arrangement, it is not intended to be limited to the details shown, since various modifications and structural changes may be made within the scope of the ensuing claims.

## Claims

1. A bolt for connecting two parts (8,9) together, comprising a bolt member (1-5) having a washer (5) with a first facial area (6) adapted to abut against a facial area (7) of one of the parts (8) and an opposite second facial area (11) and an elongate member (2,4) with a longitudinal axis and comprising a screw-threaded first portion (2) provided with a screw thread, and a second portion (3) on which said washer (5) is non-rotatably mounted; a sleeve (19) screw-threadedly engaged with said screw-threaded first portion (2) and having a facial area (10) abutting against said second facial area (11) of said washer (5); and tool-engaging means (12-14) provided on said bolt member(1-5) for enabling a given force to be applied to the bolt member in one direction; **characterised in that** further tool-engaging means (13) are provided on said sleeve (19) to enable a given force to be applied in an opposite direction to that applied to said bolt member, so that when a given force is applied in a first direction to said bolt member (1-5) through said first-mentioned tool-engaging means (12,14) and a given force is applied in an opposite direction to said sleeve (19) through said second-mentioned tool-engaging means, only said sleeve (19) turns while said bolt member (1-5) does not turn.

2. A bolt according to claim 1, wherein said elongate member (2,4) and said washer (5) are each provided with said first-mentioned tool-engaging means (12,14).

3. A bolt according to claim 1 or 2, wherein said washer (5) comprises a friction washer.

4. A bolt according to any one of the preceding claims, wherein said second-mentioned tool-engaging means (13) are provided in an end face of said sleeve (19).

5. A fastening arrangement for connecting two parts (8,9) together, comprising a bolt according to any one of the preceding claims and a single torque tool (21) including driving means for simultaneously applying the given force in one direction to the bolt member (1-5) and in the opposite direction to said sleeve (19) via said first- and second-mentioned tool-engaging members.

## Patentansprüche

1. Bolzen zum Miteinanderverbinden von zwei Teilen (8, 9), der Folgendes umfasst: ein Bolzenglied (1 - 5) mit einer Unterlegscheibe (5), die einen ersten Flächenbereich (6), der zur Anlage an einen Flächenbereich (7) eines der Teile (8) ausgeführt ist, und einen gegenüberliegenden zweiten Flächenbereich (11) aufweist, und einem länglichen Glied (2, 4) mit einer Längsachse, das einen ersten Gewindeteil (2), der mit einem Schraubgewinde versehen ist, und einen zweiten Teil (3), an dem die Unterlegscheibe (5) nichtdrehbar angebracht ist, umfasst; eine Hülse (19), die mit dem ersten Gewindeteil (2) in Schraubeingriff steht und einen Flächenbereich (10) aufweist, der an den zweiten Flächenbereich (11) der Unterlegscheibe (5) anstößt; und am Bolzenglied (1 - 5) vorgesehene Werkzeugeingriffsmittel (12 - 14) zur Ermöglichung des Anlegens einer gegebenen Kraft an das Bolzenglied in einer Richtung; **dadurch gekennzeichnet, dass** weitere Werkzeugeingriffsmittel (13) an der Hülse (19) vorgesehen sind, um zu ermöglichen, dass eine gegebene Kraft in einer entgegengesetzten Richtung zu der am Bolzenglied angelegten angelegt wird, so dass sich bei Anlegen einer gegebenen Kraft an das Bolzenglied (1 - 5) in einer ersten Richtung durch die als Erstes genannten Werkzeugeingriffsmittel (12, 14) und einer gegebenen Kraft an die Hülse (19) in einer entgegengesetzten Richtung durch die als Zweites genannten Werkzeugeingriffsmittel nur die Hülse (19) dreht, während sich das Bolzenglied (1 - 5) nicht dreht.

2. Bolzen nach Anspruch 1, bei dem das längliche Glied (2, 4) und die Unterlegscheibe (5) jeweils mit den als Erstes genannten Werkzeugeingriffsmitteln (12, 14) versehen sind.

3. Bolzen nach Anspruch 1 oder 2, bei dem die Unterlegscheibe (5) eine Reibscheibe umfasst.

4. Bolzen nach einem der vorhergehenden Ansprüche, bei dem die als Zweites genannten Werkzeugeingriffsmittel (13) in einer Stirnfläche der Hülse (19) vorgesehen sind.

5. Befestigungsanordnung zum Miteinanderverbinden von zwei Teilen (8, 9), die einen Bolzen nach einem der vorhergehenden Ansprüche und ein einziges Drehmomentwerkzeug (21) umfasst, das Antriebsmittel zum gleichzeitigen Anlegen der gegebenen Kraft an das Bolzenglied (1 - 5) in einer Richtung und an die Hülse (19) in der entgegengesetzten Richtung über die als Erstes und als Zweites genannten Werkzeugeingriffsglieder enthält.

## Revendications

1. Boulon pour connecter deux pièces (8, 9) ensemble, comprenant un élément de boulon (1-5) présentant une rondelle (5) pourvue d'une première région faciale (6) apte à buter contre une région faciale (7) de l'une des pièces (8), et une deuxième région faciale opposée (11), et un élément allongé (2, 4) présentant axe longitudinal et comprenant une première portion filetée (2) pourvue d'un filetage de vis, et une deuxième portion (3) sur laquelle ladite rondelle (5) est montée d'une façon non rotative; un manchon (19) engagé par vissage sur ladite première portion filetée (2) et présentant une région faciale (10) butant contre ladite deuxième région faciale (11) de ladite rondelle (5); et des moyens d'engagement d'outil (12-14) prévus sur ledit élément de boulon (1-5) pour permettre l'application d'une force donnée à l'élément de boulon dans une première direction; **caractérisé en ce que** d'autres moyens d'engagement d'outil (13) sont prévus sur ledit manchon (19) pour permettre l'application d'une force donnée dans une direction opposée à celle appliquée audit élément de boulon, de telle sorte que lorsqu'une force donnée est appliquée dans une première direction audit élément de boulon (1-5) par l'intermédiaire desdits premiers moyens d'engagement d'outil mentionnés (12, 14), et qu'une force donnée est appliquée dans une direction opposée audit manchon (19) par l'intermédiaire desdits deuxièmes moyens d'engagement d'outil mentionnés, seul ledit manchon (19) tourne tandis que l'élément de boulon (1-5) ne tourne pas.

2. Boulon suivant la revendication 1, dans lequel ledit élément allongé (2, 4) et ladite rondelle (5) sont chacun pourvus desdits premiers moyens d'engagement d'outil mentionnés (12, 14).

3. Boulon suivant la revendication 1 ou 2, dans lequel ladite rondelle (5) comprend une rondelle de friction.

4. Boulon suivant l'une quelconque des revendications précédentes, dans lequel lesdits deuxièmes moyens d'engagement d'outil mentionnés (13) sont prévus dans une face d'extrémité dudit manchon (19).

5. Système de fixation pour connecter deux pièces (8, 9) ensemble, comprenant un boulon suivant l'une quelconque des revendications précédentes, et un seul outil de torsion (21) comprenant des moyens de commande permettant d'appliquer simultanément la force donnée dans une première direction à l'élément de boulon (1-5) et dans la direction opposée audit manchon (19) par l'intermédiaire desdits premier et deuxième éléments d'engagement d'outil mentionnés.
